(19) Europäisches Patentamt
European Patent Office
Office européen des brevets

(11) **EP 4 656 760 A1**

(12) **EUROPEAN PATENT APPLICATION**
published in accordance with Art. 153(4) EPC

(43) Date of publication:
**03.12.2025  Bulletin 2025/49**

(21) Application number: **24779617.0**

(22) Date of filing: **18.03.2024**

(51) International Patent Classification (IPC):
*C22C 38/00* (2006.01)     *C21D 9/46* (2006.01)
*C22C 38/14* (2006.01)     *C22C 38/60* (2006.01)
*C22C 18/00* (2006.01)

(52) Cooperative Patent Classification (CPC):
**C21D 9/46; C22C 38/00; C22C 38/14; C22C 38/60;**
C22C 18/00

(86) International application number:
**PCT/JP2024/010398**

(87) International publication number:
**WO 2024/203492 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.03.2023  JP 2023051054**

(71) Applicant: JFE Steel Corporation
**Tokyo 100-0011 (JP)**

(72) Inventors:
• **TANAKA Yuji**
  **Tokyo 100-0011 (JP)**
• **TOMOZAWA Masanari**
  **Tokyo 100-0011 (JP)**
• **WADA Yusuke**
  **Tokyo 100-0011 (JP)**
• **MINAMI Hidekazu**
  **Tokyo 100-0011 (JP)**

(74) Representative: **Hoffmann Eitle
Patent- und Rechtsanwälte PartmbB
Arabellastraße 30
81925 München (DE)**

(54)  **PLATED STEEL SHEET, MEMBER, AND PRODUCTION METHODS FOR SAME**

(57)   Provided is a high-strength coated steel sheet and a member having excellent delayed fracture resistance and coatability, and methods for producing the same.

A coated steel sheet includes a steel sheet having a chemical composition containing, in mass%, C, Si, Mn, P, Al, N, Ti, Nb, and B in specified contents, in which the total area fraction of martensite and bainite is 95.0% or more, the retained austenite are fraction is 4.8% or less, the ferrite area fraction is 0.2% or more and 3.0% or less, the prior austenite (prior $\gamma$) grain size is 10 $\mu$m or less, the B concentration in a prior $\gamma$ grain boundary between adjacent grains of martensite is 0.05% or more in mass%, the variation in B concentration within the same prior $\gamma$ grain boundary between adjacent grains of martensite is less than 0.010% in mass%, and the variation in B concentration within the same prior $\gamma$ grain boundary present between martensite and ferrite is 0.010% or more in mass%. The coated steel sheet also includes a coating layer formed on at least one surface of the steel sheet.

**Description**

Technical Field

The present invention relates to a coated steel sheet, a member, and methods for producing the same.

Background Art

Strength and good delayed fracture resistance are required of automotive steel sheets.
Patent Literature 1 discloses a high-strength steel sheet having good workability and a method for producing the same. Patent Literature 2 discloses a high-strength cold rolled steel sheet and a method for producing the same.

Citation List

Patent Literature

PTL 1: Japanese Unexamined Patent Application Publication No. 2013-147736
PTL 2: Japanese Unexamined Patent Application Publication No. 2008-106351

Summary of Invention

Technical Problem

However, the steel sheets disclosed in Patent Literature 1 and Patent Literature 2 all have a tensile strength TS of less than 1180 MPa, and the delayed fracture resistance is not considered.
The present invention has been made under such circumstances, and an object thereof is to provide a high-strength coated steel sheet and a member having a tensile strength TS of 1180 MPa or more and excellent delayed fracture resistance and coatability, and methods for producing the same.
Note that, in the present invention, high strength means that the tensile strength TS as measured in conformity with JIS Z 2241 (2011) is 1180 MPa or more.
Furthermore, excellent delayed fracture resistance means that when a test specimen is subjected to a fixed load test of a surface layer at a tensile stress of 1800 MPa and is immersed in an aqueous hydrochloric acid solution having a pH of 3, no cracking occurs 100 hours after the immersion.
Excellent coatability means that there is no uncoated portion under visual observation.

Solution to Problem

The inventors of the present invention have earnestly conducted studies to achieve the aforementioned object and thus gained following findings.
In order to achieve tensile strength TS: 1180 MPa or more, the main phase is preferably martensite or bainite. In addition, in order to improve the delayed fracture resistance, inclusion of 0.0015 mass% or more of B is effective.
B is considered to have an effect of strengthening the grain boundaries serving as fracture paths by segregating to the prior-austenite grain boundaries.
Meanwhile, addition of B causes the B-containing oxides of Si and Mn to concentrate in the surface during annealing and degrades the coatability. Here, it has been found that the coatability is affected less as long as the B content is less than 0.0015 mass%. Thus, a method for improving the delayed fracture resistance by setting the B content to less than 0.0015% is studied. It has thus been conceived that, by causing B to nonuniformly segregate to the prior-austenite grain boundaries and thereby forming grain boundaries with a high B concentration and grain boundaries with a low B concentration and causing a sufficient amount of B to segregate to some of the grain boundaries even at a B content of less than 0.0015%, the delayed fracture resistance is improved.
To address this, a means for causing B to nonuniformly segregate to the prior-austenite grain boundaries to increase the B concentration in some of the grain boundaries has been investigated. As a result, it has been found that, by performing the step of causing B to segregate to the grain boundaries twice and by causing nucleation of new austenite grains during the second time, nonuniform segregation of B occurs. Annealing a cold rolled sheet in an austenite region causes B to segregate to the austenite grain boundaries; however, at this stage, diffusion of B is insufficient and solute B is present, and thus the segregated B is nonuniform but the concentration is insufficient.

Cooling this steel once to form a martensite-bainite microstructure and then annealing the steel again for the second time to form an austenite reverse transformation microstructure. Regarding this point, when retained austenite is present after the first annealing and cooling, an austenite microstructure having the same crystal orientation as in the first annealing is formed from the retained austenite as the nuclei. Furthermore, martensite and bainite contain numerous dislocations, and B that has been dissolved therein diffuses rapidly into austenite grain boundaries through the dislocations during the second annealing; thus, uniform segregation of B occurs. However, uniform segregation decreases the grain boundary B concentration; thus, there is need to have B highly segregating to only some of the grain boundaries while allowing for low segregation in others. To do this, the focus is directed on the phenomenon in which, when a subzero treatment is performed after the first annealing to transform some of retained austenite, martensite with a high C concentration is formed, and, from this martensite, fresh nucleation of austenite having a crystal orientation different from that of the austenite formed during the first annealing occurs during the second annealing. The freshly formed austenite grain boundaries are at different positions from the austenite grain boundaries formed the first time, and thus the boron concentration is low and nonuniform. Retained austenite that undergoes martensite transformation as a result of the subzero treatment is mainly massive retained austenite, and film retained austenite remains even after the subzero treatment. Austenite having the same crystal orientation as the one during the first annealing is formed from the thin, film retained austenite. When this microstructure is cooled, ferrite is formed from grain boundaries where the B concentration is low and nonuniform; however, a high strength of 1180 MPa or more can be securely obtained as long as the ferrite area fraction here is 3.0% or less. The microstructure formed as such can improve the delayed fracture resistance since B concentrates in the prior-austenite grain boundaries sandwiched by martensite even when the B content is less than 0.0015%.

The present invention has been made based on the aforementioned findings. In other words, the gist of features of the present invention is as follows.

[1] A coated steel sheet including:

a steel sheet having a chemical composition containing, in mass%,
C: 0.10% or more and 0.30% or less,
Si: more than 1.20% and 2.00% or less,
Mn: 2.5% or more and 4.0% or less,
P: 0.050% or less,
S: 0.020% or less,
Al: 0.10% or less,
N: 0.01% or less,
Ti: 0.100% or less,
Nb: 0.002% or more and 0.050% or less,
B: 0.0008% or more and less than 0.0015%, and
the balance being Fe and incidental impurities,
wherein the chemical composition satisfies formula (1) below,
a total area fraction of martensite and bainite is 95.0% or more,
a retained austenite area fraction is 4.8% or less,
a ferrite area fraction is 0.2% or more and 3.0% or less,
a prior-austenite grain size is 10 μm or less,
a B concentration in a prior-austenite grain boundary present between adjacent grains of martensite is 0.05% or more in mass%,
a variation in B concentration within the same prior-austenite grain boundary present between adjacent grains of martensite is less than 0.010% in mass%, and
a variation in B concentration within the same prior-austenite grain boundary present between martensite and ferrite is 0.010% or more in mass%; and
a coating layer formed on at least one surface of the steel sheet,

$$([\%N]/14)/([\%Ti]/47.9) < 1.0 \quad \cdots \quad \text{formula (1)}$$

in formula (1), [%N] and [%Ti] respectively represent a N content and a Ti content (mass%) in steel.

[2] The coated steel sheet described in [1], wherein

the chemical composition further contains, in mass%, at least one selected from
V: 0.100% or less,
Mo: 0.500% or less,

Cr: 1.00% or less,
Cu: 1.00% or less,
Ni: 0.50% or less,
Sb: 0.200% or less,
Sn: 0.200% or less,
Ta: 0.200% or less,
W: 0.400% or less,
Zr: 0.0200% or less,
Ca: 0.0200% or less,
Mg: 0.0200% or less,
Co: 0.020% or less,
REM: 0.0200% or less,
Te: 0.020% or less,
Hf: 0.10% or less, and
Bi: 0.200% or less.

[3] A member obtained by using the coated steel sheet described in [1] or [2].

[4] A method for producing a coated steel sheet, the method including:

a hot rolling step of hot-rolling a steel slab having the chemical composition described in [1] or [2] to obtain a hot rolled sheet;

a pickling step of pickling the hot rolled sheet;

a cold rolling step of cold-rolling the hot rolled sheet, which has been subjected to the pickling step, to obtain a cold rolled sheet;

a first annealing step of heating the cold rolled sheet to a first heating temperature equal to or higher than an Ac3 point;

a cooling step of starting cooling of the cold rolled sheet, which has been subjected to the first annealing step, from the first heating temperature and cooling the cold rolled sheet to a cooling stop temperature equal to or higher than 100°C and lower than an Ms temperature at an average cooling rate of 50°C/s or more;

a reheating step of performing heating to a reheating temperature of 300°C or higher and 400°C or lower after the cooling step, holding the reheating temperature for 60 s or longer, and performing cooling to room temperature;

a subzero treatment step of performing a subzero treatment after the reheating step;

a second annealing step of performing heating after the subzero treatment step to a second heating temperature equal to or higher than the Ac3 point to obtain a steel sheet; and

a coating step of subjecting the steel sheet to a coating treatment to obtain a coated steel sheet.

[5] The method for producing a coated steel sheet described in [4], further including an alloying step of subjecting the coated steel sheet to an alloying treatment after the coating step.

[6] A method for producing a member, the method including a step of subjecting the coated steel sheet described in [1] or [2] to either or both of a forming process and a joining process.

Advantageous Effects of Invention

According to the present invention, a high-strength coated steel sheet and a member that has a tensile strength TS of 1180 MPa or more and excellent delayed fracture resistance and coatability, and methods for producing the same can be provided.

Description of Embodiments

The embodiments of the present invention will now be described. However, the present invention is not limited to the embodiments described below.

A coated steel sheet according to an embodiment includes: a steel sheet having a chemical composition containing, in mass%, C: 0.10% or more and 0.30% or less, Si: more than 1.20% and 2.00% or less, Mn: 2.5% or more and 4.0% or less, P: 0.050% or less, S: 0.020% or less, Al: 0.10% or less, N: 0.01% or less, Ti: 0.100% or less, Nb: 0.002% or more and 0.050% or less, B: 0.0008% or more and less than 0.0015%, and the balance being Fe and incidental impurities, wherein the chemical composition satisfies formula (1) below, a total area fraction of martensite and bainite is 95.0% or more, a retained austenite area fraction is 4.8% or less, a ferrite area fraction is 0.2% or more and 3.0% or less, a prior-austenite grain size is 10 μm or less, a B concentration in a prior-austenite grain boundary present between adjacent grains of martensite is 0.05% or more in mass%, a variation in B concentration within the same prior-austenite grain boundary present between adjacent grains of martensite is less than 0.010% in mass%, and a variation in B concentration within the same prior-austenite grain boundary present between martensite and ferrite is 0.010% or more in mass%; and a coating layer formed on at least one surface of the steel sheet.

$$([\%N]/14)/([\%Ti]/47.9) < 1.0 \quad \cdots \text{ formula (1)}$$

In formula (1), [%N] and [%Ti] respectively represent a N content and a Ti content (mass%) in steel.

[Chemical composition]

First, appropriate ranges of the chemical composition of the steel sheet and the reasons for the limitations are described. In the description below, "%" indicating the content of a component element in the steel sheet means "mass%" unless clearly indicated otherwise. Unless clearly indicated otherwise, "ppm" means "mass ppm". In this description, a numerical range expressed by using "to" means a range that includes a figure preceding "to" and a figure following "to" as a lower limit value and an upper limit value, respectively.

C: 0.10% or more and 0.30% or less

C has an effect of strengthening the martensite-bainite microstructure. At a C content of less than 0.10%, the martensite and bainite area fractions decrease, and a tensile strength TS (hereinafter may also be simply referred to as TS) of 1180 MPa or more is not obtained. Thus, the C content is 0.10% or more. The C content is preferably 0.11% or more.
Meanwhile, at a C content exceeding 0.30%, carboborides of B and iron are formed during annealing, and a sufficient amount of B cannot segregate to the grain boundaries. Thus, the C content is 0.30% or less.
The C content is preferably 0.28% or less.

Si: more than 1.20% and 2.00% or less

Si is an element effective for solid solution strengthening and has an effect of suppressing precipitation of carboboride that deteriorates the delayed fracture resistance; thus, the Si content needs to be more than 1.20%. At a content of 1.20% or less, carboboride precipitates, the B concentration of the grain boundaries decreases, and the delayed fracture resistance is degraded. Thus, the Si content is more than 1.20%. The Si content is preferably 1.30% or more.
Meanwhile, Si is a ferrite-stabilizing element and increases the transformation point; thus, at a Si content exceeding 2.00%, the annealing temperature increases and the grain size of the prior-austenite cannot be adjusted to 10 $\mu$m or less. Thus, the Si content is 2.00% or less. The Si content is preferably 1.80% or less.

Mn: 2.5% or more and 4.0% or less

Mn is effective for improving hardenability. At a Mn content of less than 2.5%, the martensite and bainite area fractions decrease, and the strength decreases. Thus, the Mn content is 2.5% or more. The Mn content is preferably 2.8% or more.
Meanwhile, at a Mn content exceeding 4.0%, segregation sites become excessively hard, and the delayed fracture resistance is degraded. Thus, the Mn content is 4.0% or less. The Mn content is preferably 3.5% or less.

P: 0.050% or less

P segregates to the prior-austenite grain boundaries and degrades the delayed fracture resistance; thus, the P content is 0.050% or less. The P content is preferably 0.025% or less. The lower limit of the P content is not particularly specified and may be 0%; however, it involves a higher production cost to make the P content less than 0.001%, and thus the P content is preferably 0.001% or more.

S: 0.020% or less

S segregates to the prior-austenite grain boundaries and degrades the delayed fracture resistance; thus, the S content is 0.020% or less. The S content is preferably 0.018% or less. The S content is more preferably 0.0040% or less and even more preferably 0.0020% or less.
The lower limit of the S content is not particularly specified; however, it involves a higher production cost to make the S content less than 0.0001%, and thus the S content is preferably 0.0001% or more.

Al: 0.10% or less

Al is an element that acts as a deoxidizing agent, and, in order to obtain such an effect, the Al content is preferably 0.005% or more. Meanwhile, at an Al content exceeding 0.10%, ferrite tends to form and the strength decreases. Thus, the Al content is 0.10% or less. The Al content is preferably 0.05% or less.

N: 0.01% or less

N forms nitrides with Nb and B and diminishes the effects of adding Nb and B. Thus, the N content is 0.01% or less. The N content is preferably 0.006% or less. The lower limit is not particularly specified; however, from the production cost perspective, the N content is preferably 0.0001% or more.

Ti: 0.100% or more

Ti fixes N in the steel as TiN and suppresses formation of BN and NbN, and thus has an effect of enhancing the effects of adding Nb and B and improving the delayed fracture resistance. To obtain these effects, the Ti content is preferably 0.005% or more. Meanwhile, at a Ti content exceeding 0.100%, coarse Ti carbides form on the grain boundaries, and the delayed fracture resistance is degraded. Thus, the Ti content is 0.100% or less. The Ti content is preferably 0.050% or less.

Nb: 0.002% or more and 0.050% or less

Nb dissolves or precipitates as fine carbides and suppresses growth of the austenite grains during annealing. In addition, Nb can make the crystal grain size finer, complicate the fracture paths, and improve the delayed fracture resistance. In order to obtain such effects, the Nb content is 0.002% or more. The Nb content is preferably 0.005% or more.
Meanwhile, at a Nb content exceeding 0.050%, the effects are saturated, coarse Nb carbides precipitate, and the delayed fracture resistance is degraded. Thus, the Nb content is 0.050% or less. The Nb content is preferably 0.040% or less.

B: 0.0008% or more and less than 0.0015%

B segregates to the prior-austenite grain boundaries to increase the grain boundary strength and has an effect of improving the delayed fracture resistance. In order to obtain such effects, the B content is 0.0008% or more. The B content is preferably 0.0009% or more.
Meanwhile, at a B content of 0.0015% or more, B concentrates in the steel sheet surface along with Si and Mn during annealing and forms oxides, thereby degrading surface appearance and coatability. In addition, carboborides are formed, and the delayed fracture resistance is degraded. Thus, the B content is less than 0.0015%. The B content is preferably 0.0014% or less.

$$([\%N]/14)/([\%Ti]/47.9) < 1.0 \quad \cdots \text{ formula (1)}$$

In order to obtain the effects of adding B and Nb described above, N, which easily bonds with these elements, needs to be fixed by Ti. For this, the molar fraction of N is to be smaller than the molar fraction of Ti. In other words, the N content and the Ti content in the steel are adjusted to satisfy formula (1) described above. $([\%N]/14)/([\%Ti]/47.9)$ is preferably 0.6 or less. Here, in formula (1), [%N] and [%Ti] respectively represent the N content and the Ti content (mass%) in the steel.
The balance other than the aforementioned components is Fe and incidental impurities. Note that, regarding the optional components described below, the effects of the present invention are not impaired as long as the contents thereof are lower than the lower limit values, and thus these optional elements contained in amounts below the lower limits are treated as incidental impurities.

[Optional components]

The chemical composition of the steel sheet of the coated steel sheet according to this embodiment may further contain, in mass%, at least one element selected from V: 0.100% or less, Mo: 0.500% or less, Cr: 1.00% or less, Cu: 1.00% or less, Ni: 0.50% or less, Sb: 0.200% or less, Sn: 0.200% or less, Ta: 0.200% or less, W: 0.400% or less, Zr: 0.0200% or less, Ca: 0.0200% or less, Mg: 0.0200% or less, Co: 0.020% or less, REM: 0.0200% or less, Te: 0.020% or less, Hf: 0.10% or less, and Bi: 0.200% or less.

V: 0.100% or less

V forms fine carbides and has an effect of increasing the strength. At a V content exceeding 0.100%, coarse V carbides precipitate, and the delayed fracture resistance is degraded in some cases. Thus, when V is to be contained, the V content is 0.100% or less. The V content is preferably 0.080% or less and more preferably 0.060% or less.

The lower limit of the V content is not particularly limited and may be 0.000%; however, since V has an effect of increasing the strength by forming fine carbides, the V content is preferably 0.001% or more. The V content is more preferably 0.005% or more and even more preferably 0.010% or more.

Mo: 0.500% or less

Mo improves hardenability and has an effect of increasing the bainite and martensite area fractions. At a Mo content exceeding 0.500%, the effect saturates. Thus, when Mo is to be contained, the Mo content is 0.500% or less. The Mo content is preferably 0.200% or less and more preferably 0.150% or less.

The lower limit of the Mo content is not particularly limited and may be 0.000%; however, since Mo has effects of improving the hardenability and increasing the bainite and martensite area fractions, the Mo content is preferably 0.010% or more. The Mo content is more preferably 0.020% or more and even more preferably 0.030% or more.

Cr: 1.00% or less

Cr has effects of improving hardenability and increasing the bainite and martensite area fractions. At a Cr content exceeding 1.00%, the effects saturate. Thus, when Cr is to be contained, the Cr content is 1.00% or less. The Cr content is preferably 0.300% or less and more preferably 0.250% or less.

The lower limit of the Cr content is not particularly limited and may be 0.000%; however, since Cr has effects of improving hardenability and increasing the bainite and martensite area fractions, the Cr content is preferably 0.01% or more. The Cr content is more preferably 0.015% or more and even more preferably 0.030% or more.

Cu: 1.00% or less

Cu, when dissolved, has an effect of increasing the strength. In addition, Cu has an effect of improving the delayed fracture resistance. At a Cu content exceeding 1.00%, grain boundary cracking is likely to occur. Thus, when Cu is to be contained, the Cu content is 1.00% or less. The Cu content is preferably 0.60% or less and more preferably 0.30% or less.

The lower limit of the Cu content is not particularly limited and may be 0.00%; however, since Cu has an effect of increasing the strength when dissolved, the Cu content is preferably 0.01% or more. The Cu content is more preferably 0.02% or more and even more preferably 0.05% or more.

Ni: 0.50% or less

Ni has an effect of improving the hardenability, but the effect saturates at a Ni content exceeding 0.50%. Thus, when Ni is to be contained, the Ni content is 0.50% or less. The Ni content is preferably 0.20% or less and more preferably 0.15% or less.

The lower limit of the Ni content is not particularly limited and may be 0.00%; however, since Ni has an effect of increasing the hardenability, the Ni content is preferably 0.01% or more. The Ni content is more preferably 0.02% or more and even more preferably 0.03% or more.

Sb: 0.200% or less

Sb has an effect of suppressing surface oxidation, nitridation, and decarburization of the steel sheet, but the effect saturates at a Sb content exceeding 0.200%. Thus, when Sb is to be contained, the Sb content is 0.200% or less. The Sb content is preferably 0.050% or less and more preferably 0.020% or less.

The lower limit of the Sb content is not particularly limited and may be 0.000%; however, since Sb has an effect of suppressing surface oxidation, nitridation, and decarburization of the steel sheet, the Sb content is preferably 0.001% or more. The Sb content is more preferably 0.002% or more and even more preferably 0.005% or more.

Sn: 0.200% or less

As with Sb, Sn has an effect of suppressing surface oxidation, nitridation, and decarburization of the steel sheet.

At a Sn content exceeding 0.200%, the effect saturates. Thus, when Sn is to be contained, the Sn content is 0.200% or less. The Sn content is preferably 0.050% or less and more preferably 0.020% or less.

The lower limit of the Sn content is not particularly limited and may be 0.000%; however, since Sn has an effect of suppressing surface oxidation, nitridation, and decarburization of the steel sheet, the Sn content is preferably 0.001% or more. The Sn content is more preferably 0.002% or more and even more preferably 0.005% or more.

Ta: 0.200% or less

Ta forms fine carbides and has an effect of increasing the strength. At a Ta content exceeding 0.200%, coarse Ta carbides precipitate, and the delayed fracture resistance is degraded in some cases. Thus, when Ta is to be contained, the Ta content is 0.200% or less. The Ta content is preferably 0.100% or less and more preferably 0.070% or less.

The lower limit of the Ta content is not particularly limited and may be 0.000%; however, since Ta has an effect of increasing the strength by forming fine carbides, the Ta content is preferably 0.001% or more. The Ta content is more preferably 0.005% or more and even more preferably 0.010% or more.

W: 0.400% or less

W forms fine carbides and has an effect of increasing the strength. At a W content exceeding 0.400%, coarse W carbides precipitate, and the delayed fracture resistance is degraded in some cases. Thus, when W is to be contained, the W content is 0.400% or less.

The W content is preferably 0.300% or less and more preferably 0.250% or less.

The lower limit of the W content is not particularly limited and may be 0.000%; however, since W has an effect of increasing the strength by forming fine carbides, the W content is preferably 0.001% or more. The W content is more preferably 0.005% or more and even more preferably 0.010% or more.

Zr: 0.0200% or less

Zr has an effect of improving the toughness by spheroidizing inclusions and suppressing the stress concentration. At a Zr content exceeding 0.0200%, a large number of inclusions are formed, and the toughness is degraded in some cases. Thus, when Zr is to be contained, the Zr content is 0.0200% or less. The Zr content is preferably 0.0150% or less and more preferably 0.0100% or less.

The lower limit of the Zr content is not particularly limited and may be 0.0000%; however, since Zr spheroidizes inclusions, suppresses stress concentration, and has an effect of improving the toughness, the Zr content is preferably 0.0001% or more. The Zr content is more preferably 0.0010% or more and even more preferably 0.0020% or more.

Ca: 0.0200% or less

Ca can be used as a deoxidizing material. At a Ca content exceeding 0.0200%, a large number of Ca-based inclusions are formed, and the delayed fracture resistance is degraded in some cases. Thus, when Ca is to be contained, the Ca content is 0.0200% or less. The Ca content is preferably 0.0100% or less and more preferably 0.0080% or less.

The lower limit of the Ca content is not particularly limited and may be 0.0000%; however, since Ca can be used as a deoxidizing material, the Ca content is preferably 0.0001% or more. The Ca content is more preferably 0.0005% or more and even more preferably 0.0010% or more.

Mg: 0.0200% or less

Mg can be used as a deoxidizing material. At a Mg content exceeding 0.0200%, a large number of Mg-based inclusions are formed, and the delayed fracture resistance is degraded in some cases. Thus, when Mg is to be contained, the Mg content is 0.0200% or less. The Mg content is preferably 0.0100% or less and more preferably 0.0080% or less.

The lower limit of the Mg content is not particularly limited and may be 0.0000%; however, since Mg can be used as a deoxidizing material, the Mg content is preferably 0.0001% or more. The Mg content is more preferably 0.0005% or more and even more preferably 0.0010% or more.

Co: 0.020% or less

Co has an effect of increasing the strength through solid solution strengthening. At a Co content exceeding 0.020%, the effect saturates. Thus, when Co is to be contained, the Co content is 0.020% or less. The Co content is preferably 0.015% or less and more preferably 0.010% or less.

The lower limit of the Co content is not particularly limited and may be 0.000%; however, since Co has an effect of increasing the strength through solid solution strengthening, the Co content is preferably 0.001% or more. The Co content is more preferably 0.002% or more and even more preferably 0.005% or more.

REM: 0.0200% or less

REM has an effect of improving the toughness by spheroidizing inclusions and suppressing the stress concentration. At a REM content exceeding 0.0200%, a large number of inclusions are formed, and the toughness is degraded in some cases. Thus, when REM is to be contained, the REM content is 0.0200% or less. The REM content is preferably 0.0100% or less and more preferably 0.0050% or less.

The lower limit of the REM content is not particularly limited and may be 0.0000%; however, since REM spheroidizes inclusions, suppresses stress concentration, and has an effect of improving the toughness, the REM content is preferably 0.0001% or more. The REM content is more preferably 0.0005% or more and even more preferably 0.0010% or more.

Here, REM refers to a lanthanoid element from scandium (Sc) having atomic number 21 to yttrium (Y) having atomic number 39 and lanthanum (La) having atomic number 57 to lutetium (Lu) having atomic number 71. A REM concentration is the total content of one or more of the elements selected from among the REMs described above. REM is preferably La, Ce, and Nd.

Te: 0.020% or less

Te has an effect of improving the toughness by spheroidizing inclusions and suppressing the stress concentration. At a Te content exceeding 0.020%, a large number of inclusions are formed, and the toughness is degraded in some cases. Thus, when Te is to be contained, the Te content is 0.020% or less. The Te content is preferably 0.015% or less and more preferably 0.010% or less.

The lower limit of the Te content is not particularly limited and may be 0.000%; however, since Te spheroidizes inclusions, suppresses stress concentration, and has an effect of improving the toughness, the Te content is preferably 0.001% or more. The Te content is more preferably 0.002% or more and even more preferably 0.004% or more.

Hf: 0.10% or less

Hf has an effect of improving the toughness by spheroidizing inclusions and suppressing the stress concentration. At a Hf content exceeding 0.10%, a large number of inclusions are formed, and the toughness is degraded. Thus, when Hf is to be contained, the Hf content is 0.10% or less. The Hf content is preferably 0.08% or less and more preferably 0.05% or less.

The lower limit of the Hf content is not particularly limited and may be 0.00%; however, since Hf spheroidizes inclusions, suppresses stress concentration, and has an effect of improving the toughness, the Hf content is preferably 0.01% or more.

Bi: 0.200% or less.

Bi has an effect of improving bendability by reducing segregation. At a Bi content exceeding 0.200%, a large number of inclusions are formed, and the bendability is degraded in some cases. Thus, when Bi is to be contained, the Bi content is 0.200% or less. The Bi content is preferably 0.100% or less and more preferably 0.050% or less. The Bi content is even more preferably 0.010% or less and even further more preferably 0.005% or less.

The lower limit of the Bi content is not particularly limited and may be 0.000%; however, since Bi has effects of reducing segregation and improving bendability, the Bi content is preferably 0.001% or more. The Bi content is more preferably 0.002% or more and even more preferably 0.003% or more.

[Steel microstructure]

Next, the steel microstructure of the steel sheet is described.

Total area fraction of martensite and bainite: 95.0% or more

Martensite and bainite are both hard phases and are necessary for achieving a TS of 1180 MPa or more. Thus, the total area fraction of martensite and bainite is 95.0% or more. The total area fraction of martensite and bainite is preferably 96.0% or more. Since ferrite is formed from grain boundaries with nonuniform B concentrations, the upper limit of the total area fraction of martensite and bainite is 99.8%.

Retained austenite area fraction: 4.8% or less

Retained austenite may be included as the remaining microstructure other than martensite and bainite. Thus, the retained austenite area fraction is 4.8% or less. The retained austenite area fraction is more preferably 4.7% or less and even more preferably 4.5% or less. Furthermore, the retained austenite area fraction is preferably 4% or less. The retained austenite area fraction is more preferably 3.8% or less, even more preferably 3.7% or less, and even further more preferably 3.5% or less. The retained austenite area fraction may be 0% or more than 0%.

Ferrite area fraction: 0.2% or more and 3.0% or less

Ferrite is formed from austenite grain boundaries having nonuniform B concentrations. As long as the ferrite area fraction is 0.2% or more, the B concentration in the prior-austenite grain boundaries in which no ferrite is formed is sufficiently high, and the delayed fracture resistance is good. Thus, the ferrite area fraction is 0.2% or more. The ferrite area fraction is preferably 0.3% or more and more preferably 0.5% or more.

Meanwhile, at a ferrite area fraction exceeding 3.0%, the strength is degraded. Thus, the ferrite area fraction is 3% or less. The ferrite area fraction is preferably 2.5% or less and more preferably 2.0% or less.

The area fraction of each microstructure is measured as follows. The retained austenite area fraction is determined by taking a test specimen from each steel sheet, chemically polishing the rolled surface down to a sheet thickness $t/4$ position of the steel sheet, measuring the X-ray diffraction intensity and the diffraction peak positions of the polished surface by using an X-ray diffraction (XRD) instrument, and calculating a volume fraction therefrom as the retained austenite area fraction. Next, a sheet thickness section parallel to the rolling direction of each steel sheet is polished and is then etched with 3 vol% nital to prepare an observation surface at the sheet thickness $t/4$ position. SEM images in three fields of view are taken from the observation surface at a magnification of 2000x with a field of view region of $57.1\ \mu\text{m} \times 42.9\ \mu\text{m}$. From the obtained SEM images, the total area fraction of martensite, bainite, and retained austenite, and the area fraction of the microstructure (ferrite) other than martensite, bainite, and retained austenite are determined by image analysis. From the area fraction of the martensite, bainite, and retained austenite obtained by image analysis, the retained austenite area fraction determined by XRD is subtracted to determine the area fraction of martensite and bainite. The average of three fields of view is assumed to be the area fraction of the microstructure.

Prior-austenite grain size: 10 $\mu$m or less

The delayed fracture resistance can be improved by complicating the crack propagation path. In order to obtain this effect, the prior-austenite grain size needs to be 10 $\mu$m or less. Thus, the prior-austenite grain size is 10 $\mu$m or less. The prior-austenite is preferably 9 $\mu$m or less. The lower limit of the prior-austenite grain size is not particularly limited; however, from the viewpoint of production technology, the prior-austenite grain size is preferably 1 $\mu$m or more. The prior-austenite grain size is more preferably 2 $\mu$m or more and even more preferably 3 $\mu$m or more.

Here, the grain size of the prior-austenite is measured as follows. A sheet thickness section parallel to the rolling direction of each steel sheet is polished and then etched with picral to prepare an observation surface. SEM images of the microstructure at the sheet thickness $t/4$ position in three fields of view are taken from the observation surface with SEM at a magnification of 2000x with a field of view region of $57.1\ \mu\text{m} \times 42.9\ \mu\text{m}$. From the obtained microstructure images, the grain size of each of the prior-austenite grains is determined by image analysis, and the average of the three fields of view is assumed to be the prior-austenite grain size (average crystal grain size).

B concentration in prior-austenite grain boundary present between adjacent grains of martensite: 0.05% or more in mass%

B segregates to the prior-austenite grain boundaries and thereby strengthens the grain boundaries, and can improve the delayed fracture resistance. The aforementioned effect is obtained as long as the B concentration in the prior-austenite grain boundary is 0.05% or more in mass%. Thus, the B concentration in the prior-austenite grain boundary present between adjacent grains of martensite (the prior-austenite grain boundary sandwiched by the martensite microstructures) is 0.05% or more in mass%. The B concentration in the prior-austenite grain boundary is preferably 0.07% or more in mass% and more preferably 0.10% or more in mass%.

The upper limit of the B concentration in the prior-austenite grain boundary is not specified; however, in order to appropriately prevent precipitation of hard carboborides on the grain boundary and further improve the delayed fracture resistance, the B concentration is preferably less than 6%. More preferably, the B concentration is 2% or less in mass%.

Variation in B concentration within the same prior-austenite grain boundary present between adjacent grains of martensite: less than 0.010% in mass%

In order to improve the delayed fracture resistance, uniformity of the B concentration in the aforementioned grain boundary irrespective of which grain boundary is concerned is critical as well as the aforementioned B concentration in the grain boundary. When the variation is 0.010% or more, the difference in strength results within a grain boundary, the sites where the B concentration is locally low become prone to cracking, and the delayed fracture resistance improving effect is diminished. Thus, the variation in B concentration within the same prior-austenite grain boundary present between adjacent grains of martensite (the prior-austenite grain boundary sandwiched by the martensite microstructures) is less than 0.010% in mass%. The variation is preferably 0.009% or less in mass%, and more preferably 0.008% or less in mass%.

The smaller the variation, the better; however, from the viewpoint of the production technology, the variation may be 0.001% or more. In addition, the grain boundary that contributes to improving the delayed fracture resistance by B segregation is a grain boundary sandwiched by martensite.

Variation in B concentration within the same prior-austenite grain boundary present between martensite and ferrite: 0.010% or more in mass%

The B concentration in the prior-austenite grain boundary sandwiched by martensite can be adjusted to 0.05 mass% or more by causing formation of a grain boundary present between martensite and ferrite. When the variation in B concentration within the same prior-austenite grain boundary present between martensite and ferrite is less than 0.010%, ferrite is not formed. Thus, the variation in B concentration within the same prior-austenite grain boundary present between martensite and ferrite (the prior-austenite grain boundary sandwiched by a martensite microstructure and ferrite) is 0.010% or more in mass%. The variation is preferably 0.012% or more in mass%, and more preferably 0.014% or more in mass%.

The upper limit is not particularly limited, but the variation is preferably 0.200% or less in mass%, and more preferably 0.100% or less in mass%.

Here, the B concentration and the variation in the prior-austenite grain boundary are measured as follows. A needle-shaped specimen is prepared from a prior-austenite grain boundary-containing region by SEM-FIB (focused ion beam) method. The obtained needle-shaped specimen is subjected to a 3DAP analysis by using a 3DAP instrument (LEAP 4000X Si produced by AMETEK). The measurement is carried out in laser mode. The specimen temperature is 80 K or lower. The number of B ions detected from the prior-austenite grain boundary and the number of other ions are used to determine the B concentration in the prior-austenite grain boundary. The average value of two specimens is assumed to be the B concentration. In addition, circular regions not overlapping one another and having a diameter of 5 nm or more and 10 nm or less are set at five sites on a plane of the measured prior-austenite grain boundary, and, for each of the circles, a volume of a column extending in a direction normal to the grain boundary plane is set, the B concentration on the grain boundary is determined for each of the columns, and the standard deviation thereof is assumed to be the variation in B concentration.

Note that, in the aforementioned measurement, since the prior-austenite grain size is very large with respect to a region sampled by the SEM-FIB method, the grain boundary targeted by one sampled specimen is from the same grain boundary in all cases. For example, where as the prior-austenite grain size is about 9 $\mu$m, the diameter of the region of the sampled specimen is about 0.1 $\mu$m. Thus, the determined variation in B concentration and the like is the variation within the same grain boundary.

Furthermore, whether a prior-austenite grain boundary is present between martensite and ferrite or not can be confirmed by observing the SEM images by the aforementioned method. Furthermore, whether the grain boundary is present between adjacent grains of martensite or not can also be confirmed by observing the SEM images by the aforementioned method.

According to the present invention, a coated steel sheet having a tensile strength of 1180 MPa or more can be provided. The tensile strength of the coated steel sheet is preferably 1250 MPa or more.

The aforementioned coated steel sheet has a coating layer formed on at least one surface of the steel sheet. The coating layer is preferably a hot-dip galvanized layer, a hot-dip galvannealed layer, or an electrogalvanized layer. The composition of the coating layer is not particularly limited and can be any known composition.

The composition of the hot-dip galvanized layer is not particularly limited and may be a common composition.

In one example, the coating layer has a composition that contains Fe: 20 mass% or less, Al: 0.001 mass% or more and 1.0 mass% or less, a total of 0 mass% or more and 3.5 mass% or less of at least one selected from the group consisting of Pb, Sb, Si, Sn, Mg, Mn, Ni, Cr, Co, Ca, Cu, Li, Ti, Be, Bi, and REM, and the balance being Zn and incidental impurities.

When the coating layer is a hot-dip galvanized layer, in one example, the Fe content in the coating layer is less than 7 mass%, and when the coating layer is a hot-dip galvannealed layer, in one example, the Fe content in the coating layer is 7 mass% or more and 15 mass% or less and more preferably 8 mass% or more and 13 mass% or less.

The coating weight is not particularly limited and is preferably 20 to 80 g/m$^2$ per side of the steel sheet of the coated steel sheet. In one example, the coating layer is formed on both surfaces, top and bottom surfaces, of a steel sheet (a high-strength cold rolled steel sheet).

Next, a method for producing a coated steel sheet is described.

A method for producing a coated steel sheet according to this embodiment includes: a hot rolling step of hot-rolling a steel slab having the aforementioned chemical composition to obtain a hot rolled sheet; a pickling step of pickling the hot rolled sheet; a cold rolling step of cold-rolling the hot rolled sheet, which has been subjected to the pickling step, to obtain a cold rolled sheet; a first annealing step of heating the cold rolled sheet to a first heating temperature equal to or higher than an Ac3 point; a cooling step of starting cooling of the cold rolled sheet, which has been subjected to the first annealing step, from the first heating temperature and cooling the cold rolled sheet to a cooling stop temperature equal to or higher than 100°C and lower than an Ms temperature at an average cooling rate of 50°C/s or more; a reheating step of performing heating to a reheating temperature of 300°C or higher and 400°C or lower after the cooling step, holding the reheating temperature for 60 s or longer, and performing cooling to room temperature; a subzero treatment step of performing a subzero treatment after the reheating step; a second annealing step of performing heating after the subzero treatment step to a second heating temperature equal to or higher than the Ac3 point to obtain a steel sheet; and a coating step of subjecting the steel sheet to a coating treatment to obtain a coated steel sheet.

First, a steel slab having the aforementioned chemical composition is produced.

Here, one example of the steel slab production conditions before the hot rolling step is described. First, a steel material is melted to prepare a molten steel having the aforementioned chemical composition. The melting method is not particularly limited, and any known melting method such as converter melting or electric arc melting is adoptable. The obtained molten steel is solidified to produce a steel slab (slab). The method for producing a steel slab from the molten steel is not particularly limited, and a method such as a continuous casting method, an ingot casting method, or a thin slab casting method can be employed. The steel slab may be temporarily cooled and reheated before hot rolling, or the casted steel slab may be continuously hot-rolled without being cooled to room temperature. The slab heating temperature is preferably 1100°C or higher and preferably 1300°C or lower in view of the rolling load and formation of scale. The slab heating method is not particularly limited, and, for example, the slab may be heated in a heating furnace according to a standard method.

[Hot rolling step]

The aforementioned steel slab is hot-rolled into a hot rolled sheet. Hot-rolling is not particularly limited, and a common method may be employed. Cooling after the hot rolling is also not particularly limited and the hot rolled sheet is cooled to a coiling temperature. Next, the hot rolled sheet is coiled into a coil. The coiling temperature is preferably 400°C or higher. This is because the hot rolled sheet can be easily coiled without increasing the strength as long as the coiling temperature is 400°C or higher. The coiling temperature is more preferably 550°C or higher. In addition, to appropriately avoid formation of thick scale and improve the yield, the coiling temperature is preferably 750°C or lower. Here, before pickling, the hot rolled sheet may be heat-treated for softening.

[Pickling step]

After the hot rolling step, the hot rolled sheet is pickled in the pickling step.

In the pickling step, the scale on the hot rolled sheet coiled into a coil can be removed. The method for removing the scale is not particularly limited, but in order to completely remove the scale, pickling is preferably performed while uncoiling the hot rolled coil. The pickling method is not particularly limited and may be any standard method.

[Cold rolling step]

In a cold rolling step after the pickling step, the hot rolled sheet is cold-rolled into a cold rolled sheet. For example, a hot rolled sheet from which scale has been removed is cleaned as appropriate and then cold-rolled into a cold rolled sheet. The cold rolling method is not particularly limited and may be any standard method.

[First annealing step: heating to first heating temperature equal to or higher than Ac3 point]

Next, in the first annealing step, the cold rolled sheet is heated to a first heating temperature equal to or higher than the Ac3 point and is annealed in an austenite single phase region. When the first heating temperature is lower than the Ac3 point, ferrite is formed. This ferrite has dislocations reduced by annealing and thus there is no dislocation that serves as a boron (B) diffusion path during the second annealing; thus, it becomes difficult to uniformly segregate boron. Furthermore, excessive heating increases the austenite grain size to larger than 10 $\mu$m. Thus, the first heating temperature is equal to or higher than the Ac3 point. The first heating temperature is preferably equal to or higher than Ac3 point + 10°C and more preferably equal to or higher than Ac3 point + 15°C.

The austenite microstructure formed by the second annealing has the same crystal structure as the austenite microstructure formed by the first annealing; thus, the first heating temperature is preferably 980°C or lower to make the austenite grain size to 10 $\mu$m or less even in the first annealing. The first heating temperature is more preferably 950°C or lower.

The Ac3 point is determined by the following equation. Ac3 (°C) = 881 - 206 × [%C] + 53 × [%Si] - 15 × [%Mn] - 27

$\times$ [%Cu] - 20 $\times$ [%Ni] - 1 $\times$ [%Cr] + 41 $\times$ [%Mo] (in this equation, [%M] represents the content (mass%) of the element M in the steel sheet and the value of the element not contained is 0 (zero).)

[Cooling step: starting cooling from first heating temperature and perform cooling to cooling stop temperature equal to or higher than 100°C and lower than Ms temperature at average cooling rate of 50°C/s or more]

[Reheating step: heating to reheating temperature of 300°C or higher and 400°C or lower, holding reheating temperature for 60 s or longer, and performing cooling to room temperature]

After the first annealing step, in order to obtain a microstructure in which retained austenite is present at the prior-austenite grain boundaries, the cold rolled sheet is subjected to a partial quenching-partitioning treatment in the cooling step. When the cooling stop temperature of the partial quenching is lower than 100°C, martensite transformation occurs before C partitioning, and a sufficient amount of retained austenite cannot be obtained before the second annealing. When the amount of the retained austenite is insufficient, austenite having a different orientation than that in the first annealing is formed, and it is difficult to have boron (B) uniformly segregate to the grain boundaries of such austenite. Thus, the cooling stop temperature in the cooling step is 100°C or higher. The cooling stop temperature is preferably 120°C or higher and more preferably 150°C or higher.

Meanwhile, martensite transformation does not occur at a cooling stop temperature equal to or higher than the Ms temperature, and thus carbon partitioning does not occur during the subsequent reheating and retained austenite is not formed before the second annealing. When the amount of the retained austenite is insufficient, austenite having a different orientation than that in the first annealing is formed, and it is difficult to have boron (B) uniformly segregate to the grain boundaries of such austenite.

Thus, the cooling stop temperature in the cooling step is lower than the Ms temperature. The cooling stop temperature is preferably equal to or lower than Ms temperature - 10°C and more preferably equal to or lower than Ms temperature - 20°C.

The Ms temperature is determined by the following equation. Ms (°C) = 499 - 308 $\times$ [C] - 10.8 $\times$ [Si] - 32.4 $\times$ [Mn] - 16.2 $\times$ [Ni] - 27 $\times$ [Cr] - 10.8 $\times$ [Mo] (in this equation, [M] represents a content (mass%) of the element M in the steel sheet, and the value of the element not contained is 0 (zero).

Ferrite transformation occurs when the average cooling rate is less than 50°C/s. Since this ferrite is substantially free of dislocations, the ferrite transformation slows diffusion of boron during the second annealing, and the grain boundary concentration of B becomes insufficient in the final microstructure. Thus, the average cooling rate is 50°C/s or more. The average cooling rate is preferably 60°C/s or more and more preferably 70°C/s or more.

The upper limit for the average cooling rate is not particularly limited, but the first cooling stop temperature becomes difficult to control when the cooling rate is excessively high; thus, the average cooing rate is preferably 1000°C/s or less and more preferably 200°C/s or less.

Note that the average cooling rate (°C/s) in the cooling step is "(first heating temperature (°C)) - (cooling stop temperature (°C))/(cooling time (sec) from first heating temperature (°C) to cooling stop temperature (°C))".

When the reheating temperature is lower than 300°C, carbon partitioning does not sufficiently occur, and retained austenite is not formed before the second annealing. When the amount of the retained austenite is insufficient, austenite having a different orientation than that in the first annealing is formed, and it is difficult to have boron (B) uniformly segregate to the grain boundaries of such austenite.

Thus, the reheating temperature is 300°C or higher. The reheating temperature is preferably 310°C or higher and more preferably 320°C or higher.

Meanwhile, when the reheating temperature exceeds 400°C, non-transformed austenite decomposes into cementite, and retained austenite is not formed before the second annealing. When the amount of the retained austenite is insufficient, austenite having a different orientation than that in the first annealing is formed, and it is difficult to have boron (B) uniformly segregate to the grain boundaries of such austenite. Thus, the reheating temperature is 400°C or lower. The reheating temperature is preferably 390°C or lower and more preferably 380°C or lower.

When the time for which the reheating temperature is held (reheating holding time) is shorter than 60 s, carbon partitioning does not sufficiently occur, and retained austenite is not formed before the second annealing. When the amount of the retained austenite is insufficient, austenite having a different orientation than that in the first annealing is formed, and it is difficult to have boron (B) uniformly segregate to the grain boundaries of such austenite.

Thus, the reheating temperature holding time is 60 s or longer. The holding time is preferably 80 s or longer and more preferably 100 s or longer.

In addition, the reheating temperature holding time is preferably 900 s or shorter and more preferably 600 s or shorter.

After holding the reheating temperature, cooling is performed to room temperature. Here, the room temperature that serves as the cooling stop temperature in the reheating step is not particularly limited and can be 5 to 50°C.

[Subzero treatment step]

A subzero treatment is performed to transform massive retained austenite to thereby obtain martensite in which C is concentrated. From the obtained martensite, austenite having an orientation different from that in the first time is newly nucleated, and grain boundaries with nonuniform B concentrations can be obtained. Film retained austenite remains despite this treatment, an austenite microstructure having the same crystal orientation as that of the austenite the first time is formed in the subsequent annealing, and the grain boundaries thereof have B concentrated uniformly.

The specific conditions for the subzero treatment are not particularly limited, and a cold rolled sheet subjected to the reheating step is preferably dipped in liquid nitrogen (-196°C) for 30 minutes or longer. Moreover, the cold rolled sheet is preferably immersed in liquid nitrogen for 3 hours or shorter.

[Second annealing step: heating to second heating temperature equal to or higher than Ac3 point]

In the second annealing step, the steel sheet (cold rolled sheet) obtained as above is again heated to a second heating temperature equal to or higher than the Ac3 point and annealed.

During this process, austenite having the same orientation as austenite formed in the first annealing is formed from the film retained austenite as the nuclei. As the austenite is formed, boron (B) that has dissolved through the dislocations of martensite before austenite transformation rapidly diffuses into the austenite grain boundaries, and the boron segregation becomes uniform. When the second heating temperature is lower than the Ac3 point, ferrite is formed, and the strength decreases. Thus, the second heating temperature is equal to or higher than the Ac3 point. The second heating temperature is preferably equal to or higher than Ac3 point + 10°C and more preferably equal to or higher than Ac3 point + 15°C.

Meanwhile, excessive heating increases the austenite grain size to over 10 $\mu$m and degrades the delayed fracture resistance; thus, the second heating temperature is preferably 980°C or lower. The second heating temperature is more preferably 950°C or lower.

[Coating step and alloying step]

After the aforementioned second annealing step, a coating step of coating at least one of the surfaces of the steel sheet to obtain a coated steel sheet is performed. In the alloying step after the coating step, the coated steel sheet (high-strength coated steel sheet) may be heat-treated to alloy the coating layer of the coated steel sheet to obtain an alloyed coated steel sheet.

Here, the production conditions other than those described above may be any standard conditions.

A coated steel sheet according to this embodiment obtained as described above preferably has a sheet thickness of 0.5 mm or more. The sheet thickness is preferably 2.0 mm or less.

[Member]

In this embodiment, a member that uses the aforementioned coated steel sheet in at least some part can be provided. In one example, the aforementioned coated steel sheet may be formed into an intended shape by a pressing process into an automotive part. Here, the automotive part may include, as a raw material, a steel sheet other than the coated steel sheet of this embodiment. According to this embodiment, since a coated steel sheet having a TS of 1180 MPa or more and excellent delayed fracture resistance and coatability can be provided, a member that has a TS of 1180 MPa or more as well as excellent delayed fracture resistance and coatability can be provided. The steel sheet according to this embodiment is suitable for use in automotive parts that contribute to weight reduction of automotive bodies. The coated steel sheet according to this embodiment is particularly suitable for use in, among automotive parts, members that are used in frame structure parts or reinforcing parts in general.

The aforementioned method for producing a member includes a step of subjecting the aforementioned coated steel sheet to at least one of a forming process or a joining process to obtain a member.

The forming process may involve a common processing method such as pressing without any limitation. The joining process may involve a common welding such as spot welding or arc welding, riveting, crimping, or the like without any limitation.

EXAMPLES

Steels having chemical compositions shown in Table 1 with the balance being Fe and incidental impurities were melted in a converter to prepare steel slabs. The obtained slabs were reheated, hot-rolled, and coiled to obtain hot rolled coils (hot rolled sheets). Next, the hot rolled coils were pickled while uncoiling, and cold-rolled to obtain cold rolled sheets.

The sheet thickness of the hot rolled sheets was 3.0 mm, and the sheet thickness of the cold rolled sheets was 1.2 mm. Annealing (first annealing step, cooling step, reheating step, subzero treatment step, and second annealing step) was performed under the conditions shown in Table 2 using a continuous hot-dip galvanizing line to obtain coated steel sheets (hot-dip galvanized steel sheets (GI) and hot-dip galvannealed steel sheets (GA)). The hot-dip galvanized steel sheets were dipped in a coating bath at 460°C, and the coating weight was 35 g/m$^2$ per side. Hot-dip galvannealed steel sheets were produced by adjusting the coating amount to 45 g/m$^2$ per side and then performing an alloying treatment of holding 520°C for 40 s.

The subzero treatment was performed on all steel sheets except for No. 6 and involved immersing the steel sheets in liquid nitrogen (-196°C) for 60 minutes.

[Table 1]

| Steel grade | Chemical composition (mass%) | | | | | | | | | | | | (N/14)/(Ti/47.9) |
|---|---|---|---|---|---|---|---|---|---|---|---|---|---|
| | C | Si | Mn | P | S | Al | N | Ti | Nb | B | other | |
| A | 0.21 | 1.50 | 3.2 | 0.008 | 0.0010 | 0.02 | 0.0020 | 0.018 | 0.035 | 0.0011 | - | 0.38 |
| B | 0.19 | 1.60 | 2.9 | 0.010 | 0.0009 | 0.03 | 0.0024 | 0.015 | 0.028 | 0.0018 | - | 0.55 |
| C | 0.16 | 1.60 | 2.8 | 0.005 | 0.0005 | 0.03 | 0.0035 | 0.026 | 0.042 | 0.0010 | - | 0.46 |
| D | 0.20 | 1.00 | 3.5 | 0.008 | 0.0010 | 0.03 | 0.0029 | 0.021 | 0.022 | 0.0012 | - | 0.47 |
| E | 0.25 | 1.80 | 3.2 | 0.010 | 0.0009 | 0.03 | 0.0033 | 0.026 | 0.026 | 0.0005 | - | 0.43 |
| F | 0.18 | 1.60 | 2.9 | 0.011 | 0.0007 | 0.02 | 0.0041 | 0.028 | 0.016 | 0.0010 | V:0.050 | 0.50 |
| G | 0.22 | 1.50 | 3.3 | 0.006 | 0.0007 | 0.03 | 0.0028 | 0.018 | 0.016 | 0.0011 | Mo:0.100, Cr 0.100 | 0.53 |
| H | 0.16 | 1.30 | 3.6 | 0.008 | 0.0009 | 0.03 | 0.0026 | 0.015 | 0.020 | 0.0012 | Cu:0.20, Ni 0.10 | 0.59 |
| I | 0.18 | 1.40 | 3.1 | 0.004 | 0.0006 | 0.03 | 0.0016 | 0.020 | 0.012 | 0.0010 | Sb:0.010 | 0.27 |
| J | 0.17 | 1.30 | 3.0 | 0.007 | 0.0006 | 0.03 | 0.0020 | 0.021 | 0.033 | 0.0009 | Sn:0.020 | 0.33 |
| K | 0.14 | 1.60 | 3.7 | 0.011 | 0.0009 | 0.03 | 0.0024 | 0.019 | 0.022 | 0.0013 | Ta:0.050, W:0.200 | 0.43 |
| L | 0.12 | 1.70 | 3.7 | 0.009 | 0.0008 | 0.03 | 0.0031 | 0.019 | 0.031 | 0.0011 | Zr:0.0050, Ca:0.0050 | 0.56 |
| M | 0.19 | 1.40 | 3.3 | 0.008 | 0.0005 | 0.03 | 0.0021 | 0.018 | 0.041 | 0.0009 | Mg:0.0050, Co:0.006 | 0.40 |
| N | 0.16 | 1.30 | 2.9 | 0.007 | 0.0007 | 0.03 | 0.0018 | 0.018 | 0.018 | 0.0010 | REM:0.0040, Te:0.005 | 0.34 |
| O | 0.24 | 1.40 | 3.2 | 0.008 | 0.0008 | 0.03 | 0.0020 | 0.016 | 0.011 | 0.0012 | Hf:0.02, Bi:0.004 | 0.43 |
| P | 0.18 | 1.80 | 3.3 | 0.011 | 0.0009 | 0.02 | 0.0052 | 0.014 | 0.010 | 0.0009 | - | 1.27 |
| Q | 0.08 | 1.40 | 2.9 | 0.009 | 0.0012 | 0.02 | 0.0032 | 0.018 | 0.015 | 0.0012 | - | 0.61 |
| R | 0.36 | 1.70 | 2.9 | 0.010 | 0.0010 | 0.02 | 0.0020 | 0.019 | 0.020 | 0.0012 | - | 0.36 |
| S | 0.16 | 1.70 | 2.3 | 0.010 | 0.0011 | 0.03 | 0.0036 | 0.022 | 0.026 | 0.0010 | - | 0.56 |
| T | 0.27 | 1.60 | 2.8 | 0.010 | 0.0009 | 0.02 | 0.0042 | 0.020 | 0.001 | 0.0011 | - | 0.72 |
| U | 0.24 | 1.70 | 3.2 | 0.012 | 0.0012 | 0.03 | 0.0038 | 0.021 | 0.022 | 0.0010 | - | 0.62 |
| V | 0.15 | 1.30 | 2.5 | 0.005 | 0.0006 | 0.02 | 0.0020 | 0.018 | 0.015 | 0.0011 | V:0.091, Mo:0.494, Cr:0.93, Cu:0.92, Ni:0.44, Sb:0.193, Sn:0.192, Ta:0.191, W:0.393, Zr:0.0194, Ca:0.0193, Mg:0.0195, Co:0.016, REM:0.0191, Te:0.015, Hf:0.09, Bi:0.191 | 0.38 |
| W | 0.16 | 2.10 | 2.8 | 0.005 | 0.0005 | 0.02 | 0.0022 | 0.025 | 0.036 | 0.0012 | - | 0.30 |

(continued)

| Steel grade | Chemical composition (mass%) | | | | | | | | | | | |
|---|---|---|---|---|---|---|---|---|---|---|---|---|
| | C | Si | Mn | P | S | Al | N | Ti | Nb | B | other | (N/14)/(Ti/47.9) |
| X | 0.18 | 1.60 | 4.1 | 0.006 | 0.0008 | 0.03 | 0.0024 | 0.022 | 0.028 | 0.0011 | - | 0.37 |
| Y | 0.21 | 1.40 | 3.1 | 0.054 | 0.0010 | 0.02 | 0.0032 | 0.018 | 0.016 | 0.0013 | - | 0.61 |
| Z | 0.22 | 1.30 | 3.2 | 0.009 | 0.0219 | 0.03 | 0.0018 | 0.024 | 0.022 | 0.0012 | - | 0.26 |
| AA | 0.19 | 1.50 | 3.3 | 0.008 | 0.0009 | 0.12 | 0.0016 | 0.016 | 0.034 | 0.0011 | - | 0.34 |
| AB | 0.17 | 1.60 | 3.5 | 0.007 | 0.0007 | 0.02 | 0.0022 | 0.114 | 0.035 | 0.0012 | - | 0.07 |
| AC | 0.16 | 1.70 | 3.8 | 0.006 | 0.0005 | 0.03 | 0.0020 | 0.022 | 0.062 | 0.0011 | - | 0.31 |

· The balance of the aforementioned chemical composition is Fe and incidental impurities.
· Underlines indicate items outside the scope of the present invention.

[Table 2]

| Steel sheet No. | Steel grade | First annealing | | Ms (°C) | Cooling | | Reheating | | | Subzero treatment | Second annealing | Coating (*1) |
|---|---|---|---|---|---|---|---|---|---|---|---|---|
| | | Ac3 (°C) | First heating temperature (°C) | | Cooling stop temperature (°C) | Average cooling rate (°C/s) | Reheating temperature (°C) | Reheating holding time (s) | Cooling stop temperature (°C) | | Second heating temperature (°C) | |
| 1 | A | 869 | 880 | 314 | 280 | 60 | 350 | 300 | 30 | Yes | 880 | GI |
| 2 | A | 869 | 840 | 314 | 290 | 60 | 360 | 400 | 30 | Yes | 880 | GI |
| 3 | A | 869 | 890 | 314 | 340 | 60 | 380 | 300 | 20 | Yes | 890 | GI |
| 4 | A | 869 | 890 | 314 | 220 | 70 | 280 | 300 | 20 | Yes | 890 | GI |
| 5 | A | 869 | 900 | 314 | 250 | 70 | 370 | 50 | 20 | Yes | 890 | GI |
| 6 | A | 869 | 900 | 314 | 250 | 70 | 350 | 180 | 20 | No | 900 | GI |
| 7 | B | 883 | 900 | 329 | 260 | 60 | 340 | 180 | 20 | Yes | 900 | GA |
| 8 | C | 891 | 910 | 342 | 250 | 70 | 350 | 120 | 30 | Yes | 910 | GA |
| 9 | C | 891 | 910 | 342 | 220 | 70 | 320 | 300 | 30 | Yes | 870 | GA |
| 10 | D | 840 | 920 | 313 | 250 | 70 | 360 | 300 | 30 | Yes | 920 | GA |
| 11 | E | 877 | 920 | 299 | 260 | 70 | 360 | 240 | 30 | Yes | 930 | GA |
| 12 | F | 885 | 930 | 332 | 250 | 70 | 380 | 300 | 30 | Yes | 920 | GA |
| 13 | G | 870 | 920 | 304 | 270 | 70 | 350 | 450 | 30 | Yes | 910 | GA |
| 14 | H | 856 | 930 | 317 | 200 | 70 | 330 | 450 | 30 | Yes | 940 | GA |
| 15 | I | 872 | 900 | 328 | 150 | 80 | 380 | 180 | 30 | Yes | 920 | GI |
| 16 | J | 870 | 940 | 335 | 190 | 80 | 380 | 100 | 30 | Yes | 940 | GA |
| 17 | K | 881 | 940 | 319 | 200 | 70 | 330 | 180 | 30 | Yes | 920 | GA |
| 18 | L | 891 | 920 | 324 | 160 | 80 | 350 | 300 | 30 | Yes | 940 | GA |
| 19 | M | 867 | 900 | 318 | 250 | 70 | 360 | 450 | 30 | Yes | 900 | GA |
| 20 | N | 873 | 890 | 342 | 300 | 60 | 370 | 300 | 30 | Yes | 910 | GA |
| 21 | O | 858 | 920 | 306 | 150 | 80 | 370 | 240 | 30 | Yes | 930 | GA |
| 22 | P | 890 | 920 | 317 | 250 | 70 | 320 | 240 | 30 | Yes | 920 | GA |

(continued)

| Steel sheet No. | Steel grade | First annealing | | Cooling | | | Reheating | | | Subzero treatment | Second annealing | Coating (*1) |
|---|---|---|---|---|---|---|---|---|---|---|---|---|
| | | Ac3 (°C) | First heating temperature (°C) | Ms (°C) | Cooling stop temperature (°C) | Average cooling rate (°C/s) | Reheating temperature (°C) | Reheating holding time (s) | Cooling stop temperature (°C) | | Second heating temperature (°C) | |
| 23 | Q | 895 | 920 | 365 | 280 | 60 | 360 | 360 | 30 | Yes | 920 | GA |
| 24 | R | 853 | 890 | 276 | 220 | 70 | 330 | 480 | 30 | Yes | 900 | GA |
| 25 | S | 904 | 920 | 357 | 250 | 70 | 320 | 480 | 30 | Yes | 920 | GA |
| 26 | T | 868 | 900 | 308 | 250 | 70 | 350 | 360 | 30 | Yes | 890 | GA |
| 27 | U | 874 | 900 | 303 | 180 | 70 | 340 | 450 | 30 | Yes | 900 | GA |
| 28 | U | 874 | 900 | 303 | 60 | 80 | 330 | 420 | 30 | Yes | 890 | GA |
| 29 | U | 874 | 910 | 303 | 200 | 70 | 420 | 450 | 30 | Yes | 900 | GA |
| 30 | V | 867 | 920 | 320 | 180 | 70 | 370 | 300 | 30 | Yes | 920 | GA |
| 31 | W | 917 | 940 | 336 | 190 | 60 | 360 | 180 | 20 | Yes | 930 | GA |
| 32 | X | 867 | 920 | 293 | 200 | 70 | 350 | 240 | 30 | Yes | 910 | GA |
| 33 | Y | 865 | 910 | 319 | 240 | 80 | 340 | 300 | 20 | Yes | 920 | GA |
| 34 | Z | 857 | 910 | 314 | 230 | 70 | 330 | 480 | 30 | Yes | 930 | GA |
| 35 | AA | 872 | 920 | 317 | 220 | 60 | 360 | 300 | 20 | Yes | 920 | GA |
| 36 | AB | 878 | 920 | 316 | 220 | 70 | 380 | 400 | 30 | Yes | 910 | GA |
| 37 | AC | 881 | 930 | 308 | 210 | 80 | 370 | 240 | 20 | Yes | 930 | GA |
| 38 | A | 869 | 910 | 314 | 260 | 40 | 340 | 180 | 30 | Yes | 920 | GA |

· Underlines indicate items outside the scope of the present invention.
*1) GA: Hot-dip galvanized coating, GI: Hot-dip galvannealed coating

For each of obtained steel sheets, the total area fraction of martensite and bainite, the retained austenite area fraction, the ferrite area fraction, the prior-austenite grain size, the B concentration in the prior-austenite grain boundary present between adjacent martensite grains, and the variation in B concentration within the same grain boundary of prior-austenite (variation in B concentration within the same grain boundary of prior-austenite present between adjacent martensite grains and variation in B concentration within the same grain boundary of prior-austenite present between martensite and ferrite) were evaluated according to the methods described above. In addition, the tensile strength and the delayed fracture resistance were evaluated by the methods described below. The results are shown in Table 3.

[Tensile test]

The obtained steel sheets were subjected to a tensile test in conformity with JIS Z 2241 (2011). A JIS No. 5 test piece for tensile test having a longitudinal direction orienting in a direction orthogonal to the rolling direction was taken, and was subjected to a tensile test to measure the tensile strength (TS). A tensile strength TS of 1180 MPa or more was determined to be good tensile strength.

[Delayed fracture test]

The delayed fracture resistance of the steel sheet was evaluated as follows. A 30 mm × 110 mm test specimen having a longitudinal direction orienting in the rolling direction was taken from the obtained steel sheet. A strain gauge was attached to the test specimen, and the test specimen was subjected to V bending at a radius of curvature of 7 mmR at 90 degrees (R/t = 5.0). Sheet surfaces facing each other are brought to close so that the tensile stress at the test specimen surface layer was 1800 MPa and used as a test specimen for evaluating the delayed fracture resistance. This test specimen for evaluating the delayed fracture resistance was immersed in a pH 3 aqueous hydrochloric acid, and whether cracking occurred or not after 100 hours was investigated.
A steel sheet that did not crack after 100 hours was evaluated as having good delayed fracture resistance.
In the table, steel sheets that did not crack after 100 hours are indicated as having "excellent" delayed fracture resistance, and other steel sheets are indicated as having "poor" delayed fracture resistance.

[Coatability evaluation]

For coatability, "presence or absence of uncoated portion" in each of the coated steel sheets was visually observed, and steel sheets without any uncoated portion were evaluated as having good coatability. In the table, steel sheets evaluated as having good coatability are indicated as "excellent", and steel sheets evaluated as having poor coatability are indicated as "poor".

[Table 3]

| Steel sheet No. | Steel grade | M+B area fraction (%) (*1) | RA area fraction (%) (*1) | F area fraction (%) (*1) | Prior γ grain size (μm) (*2) | B concentration in prior γ grain boundary present between adjacent grains of M (mass%) | Variation in B concentration in prior γ grain boundary present between adjacent grains of M (mass%) (*2) | Variation in B concentration in prior γ grain boundary present between M and F (mass%) (*3) | TS (MPa) | Delayed fracture | Coatability | Reference |
|---|---|---|---|---|---|---|---|---|---|---|---|---|
| 1 | A | 98.1 | 1.4 | 0.5 | 7.0 | 0.09 | 0.005 | 0.020 | 1562 | Excellent | Excellent | Example |
| 2 | A | 95.2 | 1.2 | 3.6 | 8.0 | 0.04 | 0.015 | 0.015 | 1166 | Poor | Excellent | Comparative Example |
| 3 | A | 95.7 | 0.6 | 3.7 | 8.0 | 0.03 | 0.014 | 0.020 | 1146 | Poor | Excellent | Comparative Example |
| 4 | A | 95.2 | 0.8 | 4.0 | 7.0 | 0.03 | 0.015 | 0.022 | 1158 | Poor | Excellent | Comparative Example |
| 5 | A | 95.8 | 0.7 | 3.5 | 8.0 | 0.03 | 0.013 | 0.018 | 1139 | Poor | Excellent | Comparative Example |
| 6 | A | 95.3 | 0.9 | 3.8 | 9.0 | 0.03 | 0.015 | 0.016 | 1152 | Poor | Excellent | Comparative Example |
| 7 | B | 97.7 | 2.3 | 0.0 | 8.0 | 0.11 | 0.004 | - | 1496 | Excellent | Poor | Comparative Example |
| 8 | C | 98.2 | 0.9 | 0.9 | 9.0 | 0.11 | 0.006 | 0.030 | 1241 | Excellent | Excellent | Example |
| 9 | C | 91.2 | 2.4 | 6.4 | 8.0 | 0.11 | 0.004 | 0.040 | 1074 | Excellent | Excellent | Comparative Example |
| 10 | D | 95.5 | 1.0 | 3.5 | 7.0 | 0.03 | 0.013 | 0.030 | 1128 | Poor | Excellent | Comparative Example |
| 11 | E | 92.4 | 2.2 | 5.4 | 7.0 | 0.03 | 0.006 | 0.022 | 1162 | Poor | Excellent | Comparative Example |
| 12 | F | 98.1 | 0.8 | 1.1 | 8.0 | 0.09 | 0.006 | 0.016 | 1427 | Excellent | Excellent | Example |
| 13 | G | 98.1 | 1.2 | 0.7 | 7.0 | 0.08 | 0.005 | 0.022 | 1548 | Excellent | Excellent | Example |
| 14 | H | 97.8 | 1.2 | 1.0 | 7.0 | 0.09 | 0.005 | 0.018 | 1413 | Excellent | Excellent | Example |

EP 4 656 760 A1

EP 4 656 760 A1

(continued)

| Steel sheet No. | Steel grade | M+B area fraction (%) (*1) | RA area fraction (%) (*1) | F area fraction (%) (*1) | Prior γ grain size (μm) (*2) | B concentration in prior γ grain boundary present between adjacent grains of M (mass%) | Variation in B concentration in prior γ grain boundary present between adjacent grains of M (mass%) (*2) | Variation in B concentration in prior γ grain boundary present between M and F (mass%) (*3) | TS (MPa) | Delayed fracture | Coatability | Reference |
|---|---|---|---|---|---|---|---|---|---|---|---|---|
| 15 | I | 96.3 | 2.3 | 1.4 | 8.0 | 0.08 | 0.003 | 0.020 | 1535 | Excellent | Excellent | Example |
| 16 | J | 98.6 | 1.1 | 0.3 | 7.0 | 0.07 | 0.004 | 0.021 | 1496 | Excellent | Excellent | Example |
| 17 | K | 97.9 | 1.5 | 0.6 | 8.0 | 0.08 | 0.003 | 0.014 | 1510 | Excellent | Excellent | Example |
| 18 | L | 98.4 | 0.8 | 0.8 | 8.0 | 0.09 | 0.006 | 0.024 | 1526 | Excellent | Excellent | Example |
| 19 | M | 97.1 | 1.6 | 1.3 | 8.0 | 0.10 | 0.004 | 0.019 | 1442 | Excellent | Excellent | Example |
| 20 | N | 96.9 | 1.6 | 1.5 | 7.0 | 0.08 | 0.006 | 0.017 | 1394 | Excellent | Excellent | Example |
| 21 | O | 96.9 | 1.9 | 1.2 | 8.0 | 0.08 | 0.004 | 0.023 | 1552 | Excellent | Excellent | Example |
| 22 | P | 96.2 | 1.0 | 2.8 | 8.0 | 0.03 | 0.008 | 0.020 | 1446 | Poor | Excellent | Comparative Example |
| 23 | Q | 58.0 | 3.2 | 38.8 | 9.0 | 0.02 | 0.005 | 0.008 | 1014 | Poor | Excellent | Comparative Example |
| 24 | R | 96.0 | 3.2 | 0.8 | 8.0 | 0.03 | 0.020 | 0.022 | 1529 | Poor | Excellent | Comparative Example |
| 25 | S | 69.6 | 2.9 | 27.5 | 8.0 | 0.08 | 0.007 | 0.018 | 1077 | Excellent | Excellent | Comparative Example |
| 26 | T | 97.7 | 1.1 | 1.2 | 15.0 | 0.12 | 0.008 | 0.019 | 1495 | Poor | Excellent | Comparative Example |
| 27 | U | 97.4 | 0.8 | 1.8 | 8.0 | 0.09 | 0.005 | 0.032 | 1516 | Excellent | Excellent | Example |
| 28 | U | 96.8 | 1.6 | 1.6 | 7.0 | 0.02 | 0.016 | 0.024 | 1499 | Poor | Excellent | Comparative Example |
| 29 | U | 97.8 | 1.4 | 0.8 | 8.0 | 0.03 | 0.014 | 0.026 | 1510 | Poor | Excellent | Comparative Example |
| 30 | V | 97.1 | 1.1 | 1.8 | 6.0 | 0.09 | 0.005 | 0.021 | 1447 | Excellent | Excellent | Example |

(continued)

| Steel sheet No. | Steel grade | M+B area fraction (%) (*1) | RA area fraction (%) (*1) | F area fraction (%) (*1) | Prior γ grain size (μm) (*2) | B concentration in prior γ grain boundary present between adjacent grains of M (mass%) | Variation in B concentration in prior γ grain boundary present between adjacent grains of M (mass%) (*2) | Variation in B concentration in prior γ grain boundary present between M and F (mass%) (*3) | TS (MPa) | Delayed fracture | Coatability | Reference |
|---|---|---|---|---|---|---|---|---|---|---|---|---|
| 31 | W | 95.7 | 1.5 | 2.8 | 16.0 | 0.11 | 0.004 | 0.018 | 1571 | Poor | Excellent | Comparative Example |
| 32 | X | 98.3 | 1.4 | 0.3 | 6.0 | 0.09 | 0.005 | 0.020 | 1575 | Poor | Excellent | Comparative Example |
| 33 | Y | 97.9 | 1.2 | 0.9 | 7.0 | 0.08 | 0.006 | 0.016 | 1559 | Poor | Excellent | Comparative Example |
| 34 | Z | 98.5 | 1.1 | 0.4 | 8.0 | 0.07 | 0.003 | 0.018 | 1569 | Poor | Excellent | Comparative Example |
| 35 | AA | 83.1 | 1.3 | 15.6 | 7.0 | 0.09 | 0.005 | 0.020 | 1102 | Excellent | Excellent | Comparative Example |
| 36 | AB | 97.1 | 1.6 | 1.3 | 8.0 | 0.08 | 0.003 | 0.022 | 1475 | Poor | Excellent | Comparative Example |
| 37 | AC | 98.2 | 1.1 | 0.7 | 7.0 | 0.11 | 0.004 | 0.015 | 1511 | Poor | Excellent | Comparative Example |
| 38 | A | 93.1 | 1.3 | 5.6 | 70 | 0.02 | 0.005 | 0.020 | 1158 | Poor | Excellent | Comparative Example |

· Underlines indicate items outside the scope of the present invention.
*1) M: martensite, B: bainite, RA: retained austenite, F: ferrite
*2) Variation in B concentration (mass%) within the same prior y grain boundary present between adjacent grains of M.
*3) Variation in B concentration (mass%) within the same prior y grain boundary present between M and F.
"-" indicates that since F was absent, the variation in concentration between F and M could not be measured.

Table 3 indicates that the examples of the present invention have a tensile strength TS of 1180 MPa or more and excellent delayed fracture resistance and coatability. In contrast, the comparative examples are evaluated poor regarding at least one of the tensile strength TS, the delayed fracture resistance, and the coatability.

Furthermore, it was found that a member obtained by forming a steel sheet of the example of the present invention, a member obtained by joining the steel sheet, and a member obtained by forming and joining the steel sheet had high strength and excellent delayed fracture resistance and coatability comparable to those of the steel sheet of the examples of the present invention since the steel sheet of the examples of the present invention had high strength and excellent delayed fracture resistance and coatability.

**Claims**

1. A coated steel sheet comprising:

    a steel sheet having a chemical composition containing, in mass%,
    C: 0.10% or more and 0.30% or less,
    Si: more than 1.20% and 2.00% or less,
    Mn: 2.5% or more and 4.0% or less,
    P: 0.050% or less,
    S: 0.020% or less,
    Al: 0.10% or less,
    N: 0.01% or less,
    Ti: 0.100% or less,
    Nb: 0.002% or more and 0.050% or less,
    B: 0.0008% or more and less than 0.0015%, and
    the balance being Fe and incidental impurities,
    wherein the chemical composition satisfies formula (1) below,
    a total area fraction of martensite and bainite is 95.0% or more,
    a retained austenite area fraction is 4.8% or less,
    a ferrite area fraction is 0.2% or more and 3.0% or less,
    a prior-austenite grain size is 10 $\mu$m or less,
    a B concentration in a prior-austenite grain boundary present between adjacent grains of martensite is 0.05% or more in mass%,
    a variation in B concentration within the same prior-austenite grain boundary present between adjacent grains of martensite is less than 0.010% in mass%, and
    a variation in B concentration within the same prior-austenite grain boundary present between martensite and ferrite is 0.010% or more in mass%; and
    a coating layer formed on at least one surface of the steel sheet,

$$([\%N]/14)/([\%Ti]/47.9) < 1.0 \quad \cdots \text{ formula } (1)$$

    in formula (1), [%N] and [%Ti] respectively represent a N content and a Ti content (mass%) in steel.

2. The coated steel sheet according to Claim 1, wherein

    the chemical composition further contains, in mass%, at least one selected from
    V: 0.100% or less,
    Mo: 0.500% or less,
    Cr: 1.00% or less,
    Cu: 1.00% or less,
    Ni: 0.50% or less,
    Sb: 0.200% or less,
    Sn: 0.200% or less,
    Ta: 0.200% or less,
    W: 0.400% or less,
    Zr: 0.0200% or less,
    Ca: 0.0200% or less,
    Mg: 0.0200% or less,

Co: 0.020% or less,
REM: 0.0200% or less,
Te: 0.020% or less,
Hf: 0.10% or less, and
Bi: 0.200% or less.

3. A member obtained by using the coated steel sheet according to Claim 1 or 2.

4. A method for method for producing a coated steel sheet, the method comprising:

a hot rolling step of hot-rolling a steel slab having the chemical composition according to Claim 1 or 2 to obtain a hot rolled sheet;
a pickling step of pickling the hot rolled sheet;
a cold rolling step of cold-rolling the hot rolled sheet, which has been subjected to the pickling step, to obtain a cold rolled sheet;
a first annealing step of heating the cold rolled sheet to a first heating temperature equal to or higher than an Ac3 point;
a cooling step of starting cooling of the cold rolled sheet, which has been subjected to the first annealing step, from the first heating temperature and cooling the cold rolled sheet to a cooling stop temperature equal to or higher than 100°C and lower than an Ms temperature at an average cooling rate of 50°C/s or more;
a reheating step of performing heating to a reheating temperature of 300°C or higher and 400°C or lower after the cooling step, holding the reheating temperature for 60 s or longer, and performing cooling to room temperature;
a subzero treatment step of performing a subzero treatment after the reheating step;
a second annealing step of performing heating after the subzero treatment step to a second heating temperature equal to or higher than the Ac3 point to obtain a steel sheet; and
a coating step of subjecting the steel sheet to a coating treatment to obtain a coated steel sheet.

5. The method for producing a coated steel sheet according to Claim 4, further comprising an alloying step of subjecting the coated steel sheet to an alloying treatment after the coating step.

6. A method for producing a member, the method comprising a step of subjecting the coated steel sheet according to Claim 1 or 2 to either or both of a forming process and a joining process.

## INTERNATIONAL SEARCH REPORT

| | International application No. |
|---|---|
| | **PCT/JP2024/010398** |

**A. CLASSIFICATION OF SUBJECT MATTER**

*C22C 38/00*(2006.01)i; *C21D 9/46*(2006.01)i; *C22C 38/14*(2006.01)i; *C22C 38/60*(2006.01)i; *C22C 18/00*(2006.01)n
FI:   C22C38/00 301T; C22C38/14; C22C38/60; C21D9/46 J; C22C18/00

According to International Patent Classification (IPC) or to both national classification and IPC

**B. FIELDS SEARCHED**

Minimum documentation searched (classification system followed by classification symbols)

C22C38/00-C22C38/60; C21D8/02; C21D9/46; C22C18/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2023/032424 A1 (JFE STEEL CORPORATION) 09 March 2023 (2023-03-09) entire text, all drawings | 1-6 |
| A | WO 2023/032423 A1 (JFE STEEL CORPORATION) 09 March 2023 (2023-03-09) entire text, all drawings | 1-6 |
| A | WO 2023/008003 A1 (JFE STEEL CORPORATION) 02 February 2023 (2023-02-02) entire text | 1-6 |
| A | WO 2020/162561 A1 (NIPPON STEEL CORPORATION) 13 August 2020 (2020-08-13) entire text, all drawings | 1-6 |
| A | US 2017/0298466 A1 (BAOSHAN IRON & STEEL CO., LTD.) 19 October 2017 (2017-10-19) entire text | 1-6 |

☐ Further documents are listed in the continuation of Box C.   ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **07 June 2024** | **18 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/010398**

| Patent document cited in search report | | | Publication date (day/month/year) | Patent family member(s) | | | Publication date (day/month/year) |
|---|---|---|---|---|---|---|---|
| WO | 2023/032424 | A1 | 09 March 2023 | CN | 117881811 | A | |
| | | | | KR | 10-2024-0035537 | A | |
| WO | 2023/032423 | A1 | 09 March 2023 | CN | 117716060 | A | |
| | | | | KR | 10-2024-0035536 | A | |
| WO | 2023/008003 | A1 | 02 February 2023 | EP | 4350016 | A1 | |
| | | | | CN | 117651786 | A | |
| | | | | KR | 10-2024-0024947 | A | |
| WO | 2020/162561 | A1 | 13 August 2020 | US | 2022/0119908 | A1 | |
| | | | | EP | 3922745 | A1 | |
| | | | | CN | 113330133 | A | |
| | | | | KR | 10-2021-0108461 | A | |
| | | | | MX | 2021009452 | A | |
| US | 2017/0298466 | A1 | 19 October 2017 | WO | 2016/045264 | A1 | |
| | | | | CN | 105506478 | A | |
| | | | | KR | 10-2017-0063613 | A | |
| | | | | MX | 2017003993 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013147736 A
- JP 2008106351 A